# EUROPEAN PATENT APPLICATION

(11) **EP 4 799 971 A1**
(43) Date of publication of application: **02.09.2026**
(21) Application number: 26159225.7
(22) Date of filing: 18.02.2026
(51) Int. Cl.: B66F 9/065, B60B 35/00, B60G 9/02, B66F 9/075, B60K 1/00, B60K 17/22, B60K 17/34

(54) **TELEHANDLER**

(30) Priority: 26.02.2025 IT 202500003846
(71) Applicant: Dieci S.r.l., 42027 Montecchio Emilia (RE) (IT)
(72) Inventor: OGNIBENE, Enrico, 42030 VEZZANO SUL CROSTOLO (RE) (IT); COMASTRI, Davide, 42020 SAN POLO D'ENZA (RE) (IT)
(74) Representative: Rausa, Mario Alberto Manlio

(57) **Abstract**

A telehandler (10) comprising:
a machine body (11) supporting a driver's cab (14),
a propulsion structure (20) configured to permit movement of the telehandler (10) over the ground,
a load handling apparatus (13) coupled to the machine body (11) and movable by a movement actuator (130) with respect to the machine body (11),
wherein the propulsion structure (20) comprises a front axle (21) and a rear axle (22) supporting the machine body, and
wherein at least one of the front axle (21) and the rear axle (22) is coupled to the machine body (11) by means of an articulated quadrilateral such that the center of the axle can freely oscillate between two end positions located on opposite sides of a vertical median plane of the telehandler (10).

## Description

### TECHNICAL FIELD

The present invention relates to a telehandler (or telescopic lift).

### PRIOR ART

Telehandlers are work machines for lifting goods and people which change their use depending on the equipment which is connected to the lifting arm of the machine.

The known telehandlers have the front axle rigidly fixed to the frame and the rear axle oscillating around its central axle (oscillating support).

Telehandlers are typically machines with four-wheel drive and four-wheel steering for off-road work.

Telehandlers are machines with variable geometry and weight intended for lifting goods and/or people. One of the risks involved in using the machine is lateral tipping. In fact, when the telescopic arm is lifted in typical machine use, the center of gravity of the machine, equipment and lifted load assembly rises. Furthermore, when the machine tilts to one side (right or left), the aforementioned center of gravity shifts laterally (to the right or left).

For the calculation and verification, according to international standards (ISO22915), of the stability of such known telehandlers, the support base defined by a triangle with a rear vertex in the geometric center of the rear axle (i.e. the intersection of the oscillation axis of the rear axle and the axis passing through the rotation axis of the rear wheels in non-steered configuration), and the further two front vertices respectively in the center of the two front wheels, are considered.

The sides of the stability triangle joining one of the two front vertices with the rear vertex define what is known as the tipping line.

The stability of the telehandler is guaranteed if the aforementioned center of gravity (i.e. its vertical projection) remains inside the aforementioned stability triangle (i.e. does not cross the tipping line in use).

An aim of the present invention is to increase the stability of a telehandler, within the framework of a simple, rational and low-cost solution.

Such aims are achieved by the features of the invention set forth in the independent claim. The dependent claims outline preferred and/or particularly advantageous aspects of the invention.

### DISCLOSURE OF THE INVENTION

The invention, particularly, provides a telehandler comprising:
a machine body (supporting a driver's cab that can be occupied by an operator),
a propulsion structure configured to permit movement of the machine on the ground,
a load handling apparatus coupled to the machine body and movable by a movement actuator relative to the machine body,
wherein the propulsion structure comprises a front axle and a rear axle supporting the machine body, and
wherein at least one of the front axle and the rear axle is coupled to the machine body by means of an articulated quadrilateral (or articulated joint) such that the center of the axle can freely oscillate between two end positions located on opposite sides of a vertical median plane of the telehandler.

Thanks to this solution, the telehandler improves stability relative to conventional telehandlers by allowing the center of the rear axle to oscillate and thus dynamically adjusting the stability area.

In particular, the articulated coupling of at least one axle (preferably the rear axle) by means of an articulated quadrilateral allows the oscillation of the center of the axle itself. This causes a dynamic shift of the stability area, transforming what is known as the stability triangle, which usually has a fixed conformation, into a dynamic/variable conformation depending on the inclination assumed by the telehandler, in fact transforming the stability triangle essentially into a stability quadrilateral, in particular a stability trapezium (having the same major base and height as the stability triangle but a smaller base instead of the vertex opposite the major base). As a result, the stability area increases relative to the known solutions (with the rear axle hinged in the center) and the tipping line is moved to a more outward position relative to the known solutions (in the direction of the tilt), increasing the telehandler's actual stability margin.

According to an aspect of the invention, the articulated quadrilateral can comprise at least one pair of connecting rods, at least one of which is a right connecting rod and at least one of which is a left connecting rod, each of which is pivotally connected to the machine body and the axle.

The articulated quadrilateral, formed by at least one pair of connecting rods, allows controlled movement of the axle, avoiding excessive tilting while still allowing adaptation to ground conditions. This improves stability on uneven ground.

Within the scope of such an aspect, each connecting rod can be pivotally connected to the machine body relative to rotation axes located on the same side relative to the vertical median plane of the telehandler.

Positioning both rotation axes on the same side of the vertical median plane ensures a more predictable and controlled oscillation behaviour, improving stability and load distribution.

Further, the connecting rods of the connecting pair can have the same length, forming a trapezoidal configuration.

Connecting rods of equal length (left and right) create a symmetrical (relative to the median plane), controlled and predictable oscillation path, ensuring that the movement of the axle actually contributes to stability without causing erratic behaviour.

Furthermore, each connecting rod can be pivotally connected to the machine body relative to rotation axes parallel to each other and parallel to the vertical median plane of the telehandler and to a longitudinal axis of the telehandler.

The parallel alignment of the rotation axes relative to the vertical median plane and the longitudinal axis of the telehandler ensures smooth and constant oscillation of the axle, avoiding torsional forces that could compromise stability.

In a further aspect, axle oscillation can be limited by mechanical end stops located on opposite sides of the vertical median plane of the telehandler.

The mechanical end stops prevent excessive oscillation, maintaining safe and predictable stability features without compromising adaptability.

Yet another aspect envisages that only the rear axle can be coupled to the camera body by means of the aforementioned articulated quadrilateral.

By limiting the articulated quadrilateral configuration to the rear axle only, it is ensured that the front axle remains stable, achieving a balance between manoeuvrability and tipping resistance.

A further aspect envisages that the propulsion structure can comprise wheels mounted on the axles and the axle oscillation can be configured to adapt to uneven ground surfaces.

By allowing the axle to oscillate, the telehandler can better adapt to uneven surfaces, reducing the risk of wheel tilt or wheel lift on rough terrain (off-road use).

According to an aspect of the invention, the load handling apparatus can comprise a telescopic arm pivotally connected to the machine body and movable by means of the movement actuator.

The increased stability provided by the articulated axle is particularly advantageous when extending or manoeuvring the telescopic arm, as it reduces the risk of tipping under load. In the context of such an aspect, the load handling apparatus can further comprise a tool attachment configured to engage a tool and mounted at a free end of the telescopic arm. The ability to dynamically stabilize the telehandler ensures that the load remains firmly loaded on the attachment, reducing the risk of tipping and/or shifting during operation.

Optionally, the propulsion structure can comprise at least one engine.

For example, the propulsion structure comprises (or consists of) an endothermic engine. For example, the propulsion structure can comprise (or consist of) an electric engine, preferably driven by an electrical energy storage unit (which can optionally be configured to also electrically supply a supply pump of the handling apparatus).

For example, the propulsion structure can be a hybrid type, i.e. it can comprise an endothermic engine and an electric engine.

According to an aspect of the invention, the connecting rods of the articulated quadrilateral can be oscillating glyph connecting rods.

Thanks to such a configuration of the articulated quadrilateral, the stability area (which remains quadrangular in shape) of the telehandler is even more increased (and varies dynamically according to the position assumed by the centers of instantaneous rotation of the connecting rods).

Within the context of such an aspect, each connecting rod can have at least one (or only one) rotation axis, which is pivotally connected to the machine body or the axle, which is slidably connected to the respective connecting rod, preferably along a (straight) sliding direction passing through the two rotation axes of the same connecting rod.

Again, the aforementioned sliding connection (between pivot and connecting rod) comprises a guide slot (or a linear bearing), e.g. with a straight axis, which is made in the connecting rod that allows controlled movement of (the pivot defining) the rotation axis along the sliding direction.

Furthermore, the sliding connection can be free (unforced/unconditioned), between two end positions (arranged at opposite ends of the guide slot), e.g. fixed along the connecting rod.

Furthermore, the propulsion structure can comprise a drive shaft kinematically connecting the front axle and the rear axle, and the machine body can comprise a tunnel, e.g. integral with the machine body, within which said drive shaft is housed, wherein said tunnel is configured to allow an oscillation of the drive shaft adapted to accommodate the (free) oscillation of the axle allowed by the articulated quadrilateral.

### BRIEF DESCRIPTION OF THE DRAWINGS

Additional features and advantages of the invention will be more apparent after reading the following description provided by way of non-limiting example, with the aid of the figures illustrated in the attached drawings.
Figure 1 is a side view of a telehandler according to the invention, with the lifting arm in a lowered and retracted position.
Figure 2 is a side view of the telehandler of Figure 1, with the lifting arm in the raised and extended position.
Figure 3 is a frontal rear view of an early embodiment of the telehandler of Figure 2 in a central zero position.
Figure 4 is a (schematic) plan view of the propulsion structure in the configuration of Figure 3 with the stability area of the telehandler according to the invention highlighted (relative to the stability triangle of conventional telehandlers drawn with the dash-period line).
Figure 5 is a frontal rear view of the telehandler of Figure 3 in a first inclined end position.
Figure 6 is a (schematic) plan view of the propulsion structure in the configuration of Figure 5 with the stability area of the telehandler according to the invention highlighted (relative to the stability triangle of conventional telehandlers drawn with the dash-period line).
Figure 7 is a frontal view of a first variant of a second embodiment of the telehandler of Figure 2 in a central zero position.
Figure 8 is a (schematic) plan view of the propulsion structure in the configuration of Figure 7 with the stability area of the telehandler according to the invention highlighted (relative to the stability triangle of conventional telehandlers drawn with the dash-period line).
Figure 9 is a frontal rear view of the telehandler of Figure 7 in a first inclined end position.
Figure 10 is a (schematic) plan view of the propulsion structure in the configuration of Figure 9 with the stability area of the telehandler according to the invention highlighted (relative to the stability triangle of conventional telehandlers drawn with the dash-period line).
Figure 11 is a frontal rear view of a second variant of the second embodiment of the telehandler of Figure 2 in a central zero position.
Figure 12 is a (schematic) plan view of the propulsion structure in the configuration of Figure 11 with the stability area of the telehandler according to the invention highlighted (relative to the stability triangle of conventional telehandlers drawn with the dash-period line).
Figure 13 is a frontal rear view of the telehandler of Figure 11 in a first inclined end position.
Figure 14 is a (schematic) plan view of the propulsion structure in the configuration of Figure 13 with the stability area of the telehandler according to the invention highlighted (relative to the stability triangle of conventional telehandlers drawn with the dash-period line).
Figure 15 is a plan view of a machine body of the telehandler according to the invention with the front and rear axles illustrated and the drive shaft kinematically connecting them.
Figure 16 is a sectional view along the trace of section XVI-XVI of Figure 15.
Figure 17 is a sectional view along the trace of section XVII-XVII of Figure 15.
Figure 18 is a sectional view along the trace of section XVIII-XVIII of Figure 15.

### BEST MODE TO IMPLEMENT THE INVENTION

With particular reference to such figures, a telehandler, or telescopic lifter (or lifting vehicle) has been globally referred to as 10.

The telehandler 10 is provided with a movable machine body 11 (or supporting frame) on wheels 12, of which one pair of front wheels 12 and one pair of rear wheels 12.

In particular, the telehandler 10 is movable on the ground by means of a propulsion structure 20 configured to allow the telehandler to move over the ground.

The machine body 11 is substantially rigid (i.e. non-deformable under the usual workloads to which it is subjected in use).

The machine body 11 has for example an elongated shape along a longitudinal axis A1 (defining the longitudinal axis of the telehandler 10) and therefore has, at or near a first axial end thereof, a front section, and at or near an opposite second axial end thereof, a rear section.

In the present description, "front" refers to the portion of the telehandler 10 or the machine body 11 which precedes (that is, it is placed in front) in an advancement direction of the telehandler 10 on the ground in a usual and preferred forward gear, and "rear" refers to the portion of the telehandler 10 or the machine body 11 which follows (that is, it is placed behind) in an advancement direction of the telehandler 10 on the ground in a usual and preferred forward gear (or that precedes in a reverse gear).

The machine body 11 supports a load handling apparatus above, which is defined by a lifting arm 13, which will be described in more detail below.

Furthermore, the machine body 11 supports a driver's cab 14, e.g. placed (entirely) on one side of the lifting arm 13.

The machine body 11 could provide ground support stabilizers, of which, for example, two front stabilizers and/or two rear stabilizers.

The stabilizers are configured to stabilize the ground support of the telehandler 10, e.g., by enlarging the ground support area (i.e., the ground support quadrilateral) relative to the ground support area (or track) defined by the wheels 12 during determined work steps/conditions of the telehandler 10.

The stabilizers are individually movably associated with the machine body 11 (e.g., tiltable and/or extendable), as known to the person skilled in the art, by means of specific actuators.

In particular, each stabilizer is configured to be able to be switched, alternatively, between at least one work position (preferably several work positions, depending on the tilt and/or extension thereof), in which the stabilizer is supported on the ground (e.g., in addition to or in place of the ground support defined by one or more wheels 12), and at least one rest position, in which it is raised from the ground.

The lifting arm 13 is preferably hinged - at its rear end - to the machine body 11, e.g. above it, preferably at the rear section thereof.

For example, the lifting arm 13 has an elongated shape along a longitudinal axis A2 that is parallel to the longitudinal axis A1 of the machine body 11 (i.e. which lies on a plane parallel to the longitudinal axis A1 of the supporting frame itself) and therefore has a rear axial end thereof hinged to the rear section of the machine body 11 and an opposite free (distal) front axial end, which protrudes for example beyond the front end of the supporting frame 11.

The lifting arm 13 is preferably of the telescopic type.

In particular, the lifting arm 13 has a plurality of sections (or extensions) that can be driven between a contracted position and an extended position by means of a first (double-acting) hydraulic actuator.

The lifting arm 13 is hinged to machine body 11 in such a way that it can oscillate about a (single) oscillation axis O by means of a hydraulic (double-acting) movement actuator 130, e.g. interposed between the machine body 11 and the lifting arm 13.

The lifting arm 13 has, at its front free axial end, a connection member, e.g. a tool holder plate 131, adapted to be connected to one or more work tools, such as buckets, forks, cabs or others.

The front axial end of the telescopic arm 13 protrudes relative to the machine body 11, i.e. the vertical projection of the front axial end of the lifting arm 13 is (always) outside (the horizontal footprint of) the machine body 11.

The lifting arm 13 can therefore be raised/lowered by means of the rotation about the oscillation axis O (between two end positions).

In the example illustrated, the telehandler 10 is a non-rotary type; however, the possibility of it being a rotary type cannot be ruled out.

In the case of a rotary telehandler 10, it further comprises a turret supported above the machine body 11.

The turret is pivotally coupled to the machine body 11 about a (single) vertical rotation axis R (within the horizontal footprint of the machine body 11).

A motorized (e.g. electrically) or actuated (e.g. hydraulically) fifth wheel is located between the turret and the machine body 11, which is configured to rotate the turret relative to the machine body 11 about the rotation axis R, e.g. by an angle (at least) equal to (or greater than) 360°.

In this case, the lifting arm 13 (also of telescopic type in this case) articulates relative to the supporting frame 20.

Preferably, the lifting arm 13 is supported (i.e. hinged relative to the above-mentioned oscillation axis O) by the turret (above it) and is, therefore, mobile therewith in rotation about the vertical rotation axis.

A movement actuator 130, e.g., hydraulic (preferably double-acting), is present between the turret and the lifting arm 13, configured to drive the oscillation of the lifting arm 13 about the oscillation axis (for lifting and/or lowering the lifting arm 13).

Also in this case, the front axial end of the lifting arm 13 protrudes relative to the machine body 11, i.e. the vertical projection of the front axial end of the lifting arm 13 is (always) outside (the horizontal footprint of) the machine body 11.

For example, the turret is oriented and stopped (through the fifth wheel), in operating conditions of the telehandler 10, in an angular reference position in which the longitudinal axis A2 of the lifting arm 13 essentially coincides (or is coplanar) with the longitudinal axis A1 (front-rear) of the supporting frame 20 (and is therefore centered on the machine body 11).

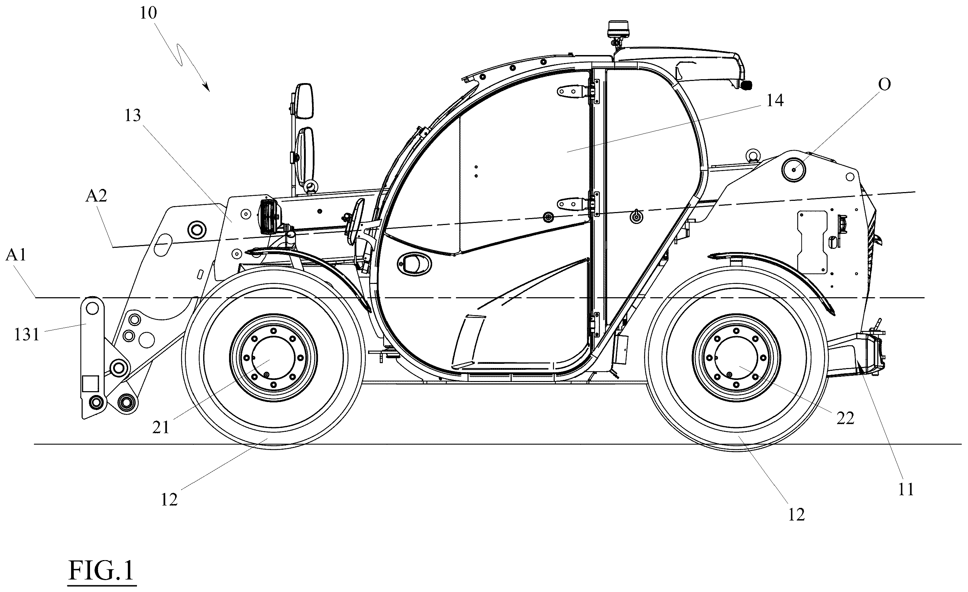

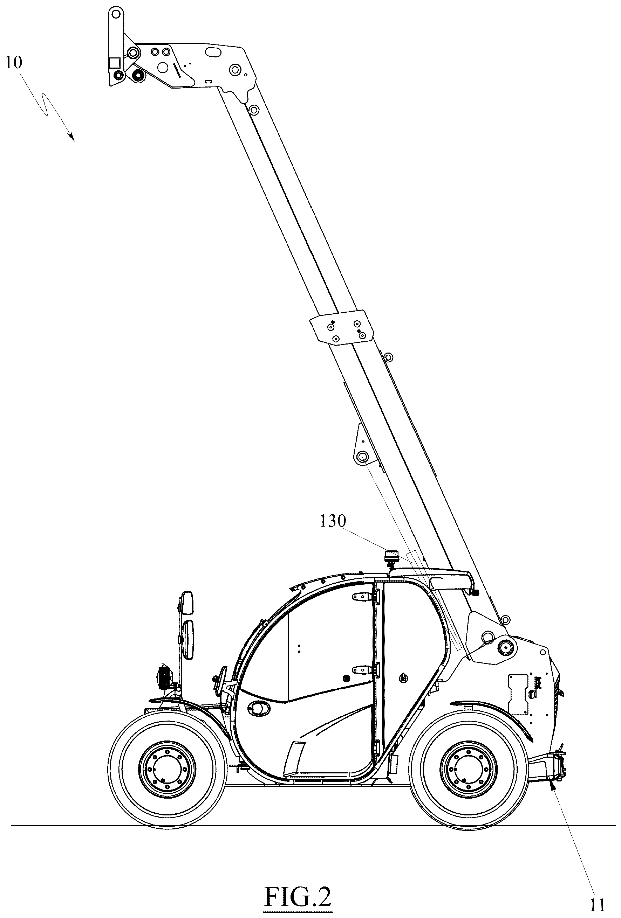

In general, in both the rotary and non-rotary versions of the telehandler 10, the lifting arm 13 can be arranged/oriented (through the oscillation about the oscillation axis O) in a lowered reference (or minimum lifting) position, illustrated in Figure 1, in which it lies substantially horizontal and in any raised position, up to a maximum lifting position (see, for example, Figures 2-5), in which it lies inclined relative to the horizontal plane by an angle preferably less than 90°.

Further, the lifting arm 13 can be lengthened/shortened to any position between a minimum elongation position (see Figure 1) and a maximum elongation position (see Figures 2-5).

Even in the rotary version of the telehandler 10, it comprises a (single) driver's cab 14, which is supported (above) and (rigidly) fixed to the turret (e.g. arranged eccentrically to the turret's rotation axis), therefore in this case the driver's cab 14 is movable with the turret rotating about the vertical rotation axis.

The driver's cab 14 is, for example, flanked by a portion of the lifting arm 13 and is (entirely) arranged on one side thereof.

In any case, inside the driver's cab 14, a seat is arranged for housing the driver of the telehandler 10 and, at the front section, first (manual) commands which allow driving the telehandler 10 (i.e., manoeuvring and propelling it) and second commands (manual, e.g., separate from the first commands) which allow manoeuvring (the turret where envisaged and/or) the lifting arm 13.

Returning to the propulsion structure 20, it comprises a (rigid) front axle 21 supporting, at the opposite free ends (provided with respective hubs), the front pair of wheels 12.

The front axle 21 is formed by an elongated body with a central portion interposed between two extension portions to whose free ends the front wheels 12 are connected. The front axle 21 is fixed, preferably rigidly, to the front section of the machine body 11. The vertical median plane of the front axle 21 (equidistant from the front 12 wheels) actually coincides with the vertical median plane of the telehandler 10.

Again, the propulsion structure 20 comprises a rear (rigid) axle 22 supporting, at the opposite free ends (provided with respective hubs), the pair of rear wheels 12.

The rear axle 22 is independent of the front axle 21.

The rear axle 22 is formed by an elongated body with a central portion interposed between two extension portions to whose free ends the rear wheels 12 are connected. The rear axle 22 is supported, as will be better described below, by the rear section of the machine body 11.

At least one of the pair of front wheels 12 and the pair of rear wheels 12 or both can be steering and/or driving wheels.

Preferably, both the front wheels 12, i.e., the hubs of the front axle 21 on which they are mounted and the rear wheels 12, i.e., the hubs of the front axle 22 on which they are mounted are, for example, steering and/or driving.

For example, front axle 21 and rear axle 22 are kinematically connected by a drive shaft 210, e.g. a cardan shaft, for the rotational drive of the driving wheels 12 (i.e. the hubs of the axles on which they are mounted).

The rear axle 22 (and only it) is coupled to the machine body 11 by means of an articulated quadrilateral 23 (or articulated joint) such that the geometric center (lying on its vertical median plane) of the rear axle 22 can oscillate freely between two end positions located on opposite sides of the vertical median plane of the telehandler 10.

Preferably, the two end positions are symmetrical relative to the vertical median plane of the telehandler 10.

The articulated quadrilateral 23 comprises at least one (or two) pairs of connecting rods 230, of which at least one right connecting rod 230 and at least one left connecting rod 230, each of the connecting rods 230 is pivotally connected to the machine body 11 and the rear axle 22, e.g. respective rotation axes R1,R2 parallel to each other and parallel to the longitudinal axis A1 of the telehandler 10 and its vertical median plane.

Preferably, each connecting rod 230 (single or double) has:
- a first end hinged, relative to a (single) rotation axis R1, to the machine body 11, e.g. on one side (left or right) thereof relative to the vertical median plane of the telehandler 10 (and at a non-zero distance therefrom); and
- an (opposite) second end hinged, relative to a (single) rotation axis R2, to the rear axle 22, e.g. on the same side (left or right) thereof relative to the vertical median plane (of the rear axle 22) and the telehandler 10 (and at a non-zero distance therefrom).

Each connecting rod 230 (single or double) is pivotally coupled to the rear axle 22 and the machine body 11 in a free, i.e. uncontrolled, manner.

Preferably, the connecting rods 230 have the same length, forming a trapezoidal configuration.

Advantageously, the first end of each connecting rod 230 is arranged at a higher height than the opposite second end of the same connecting rod 230.

Furthermore, the first end of each connecting rod 230 is arranged at a first (non-zero) distance from the vertical median plane of the telehandler 10 (the same for both connecting rods 230), and the second end of each connecting rod 230 is arranged at a second (non-zero) distance from the vertical median plane of the rear axle 22, wherein the second distance is greater than the first distance.

In practice, the distance between the rotation axes R2 (which constrain the second end of the connecting rods 230 to the rear axle 22) defines the major base of a trapezoid and the distance between the rotation axes R1 (which constrain the first end of the connecting rods 230 to the machine body 11) defines the minor base of the aforementioned trapezoid (whose inclined sides are defined by the connecting rods 230).

In practice, the geometric center of the rear axle 22 is constrained to move on an arc of circumference (symmetrical relative to the vertical median plane of the telehandler 10 and, for example, with concavity facing upwards) whose center is on the vertical median plane of the telehandler 10.

It is not excluded, however, that the first end of each connecting rod 230 can be arranged at a first (non-zero) distance from the vertical median plane of the telehandler 10 (the same for both connecting rods 230), and the second end of each connecting rod 230 can be arranged at a second (non-zero) distance from the vertical median plane of the rear axle 22, wherein the second distance is less than the first distance.

In such a case, the distance between the rotation axes R2 (which constrain the second end of the connecting rods 230 to the rear axle 22) defines the minor base of a trapezoid and the distance between the rotation axes R1 (which constrain the first end of the connecting rods 230 to the machine body 11) defines the major base of the aforementioned trapezoid (whose inclined sides are defined by the connecting rods 230).

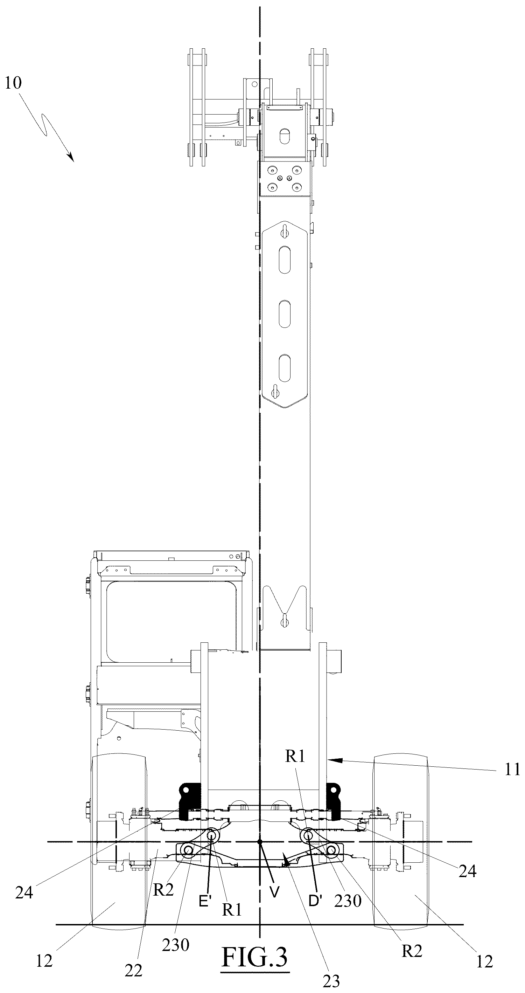

In the first embodiment shown in Figures 3-6, the rotation axes R1,R2 are arranged in fixed positions relative to the respective connecting rods 230 (and the rotation axes R1 are arranged in fixed positions of the machine body 11 as well as the rotation axes R2 are arranged in fixed positions of the rear axle 22).

Advantageously, the oscillation of the rear axle 22 is limited by mechanical end stops 24 located on opposite sides of the vertical median plane of the telehandler 10, e.g. rigidly fixed to the machine body 11 preferably at the same height.

In practice, during the oscillation of the rear axle 22 in a first rotation direction, the rear axle 22 (i.e. an upper part thereof) is intended to contact a first of the mechanical end stops 24 (defining a first end position - of maximum allowed tilt - of the rear axle in the first rotation direction) and during the oscillation of the rear axle 22 in the (opposite) second rotation direction the rear axle 22 (i.e. a further axially opposite and symmetrically arranged upper part thereof relative to the previous one) is intended to contact the second of the mechanical end stops 24 (defining a second end position - of maximum allowed tilt - of the rear axle 22 in the second rotation direction).

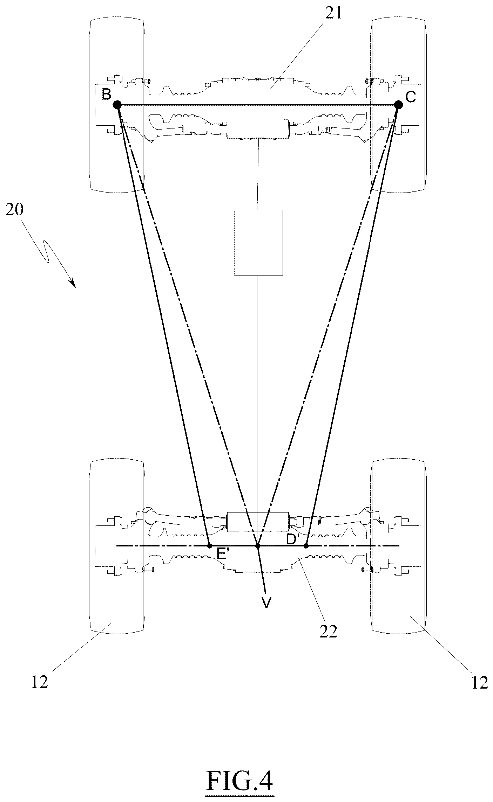

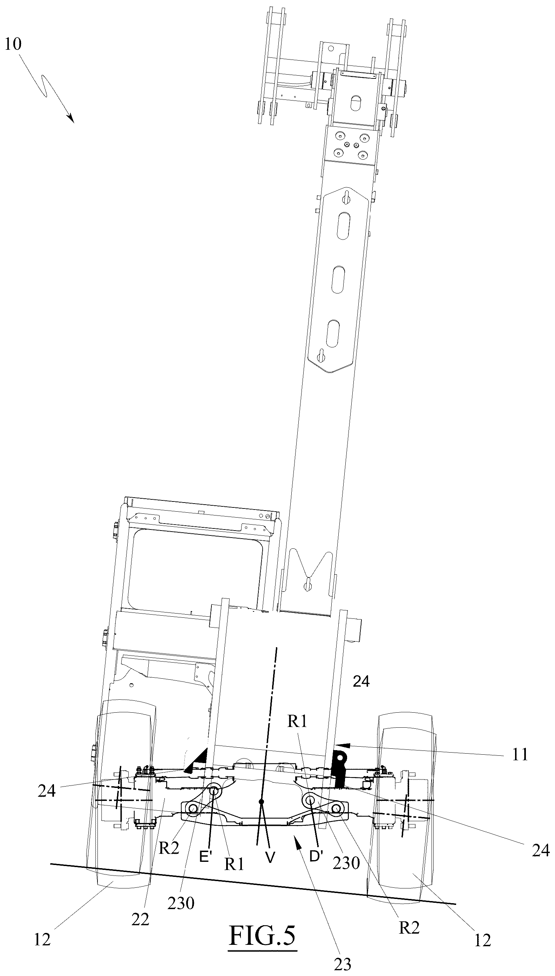

For example, the oscillations allowed to the rear axle 22 relative to the machine body 11, between the two aforementioned end positions (see Figures 4 and 5, respectively) are in a range of approximately 14°, i.e. between +7° and -7° relative to a central zero position (see Figure 3), in which the longitudinal axis of the rear axle 22 (which joins the rotation axis of the wheels 22) is orthogonal to the vertical median plane of the telehandler 10.

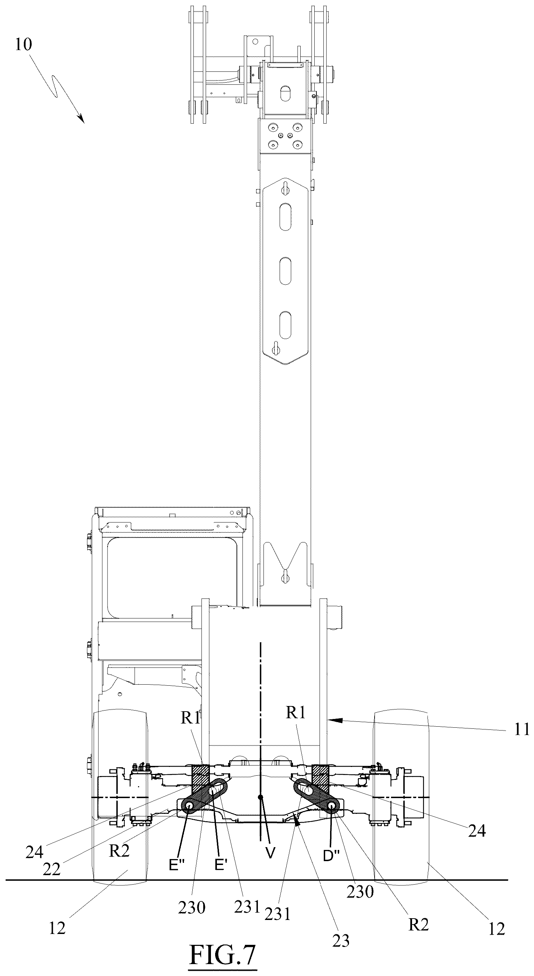

In a second embodiment shown in Figures 7-14, the articulated quadrilateral 23 can have a variable shape, e.g. by being able to vary the mutual position between the rotation axes R1,R2.

For example, some of the rotation axes R1,R2 are arranged in movable positions relative to the respective connecting rods 230 (although the rotation axes R1 are arranged in fixed positions of the machine body 11 as well as the rotation axes R2 in fixed positions of the rear axle 22).

However, the possibility of different configurations is not excluded.

For example, in such a second embodiment, the above-mentioned connecting rods 230 are oscillating glyph connecting rods.

In particular, each connecting rod 230 has at least one (preferably, only one) of the rotation axes R1,R2 (defined by respective rotation pins, e.g. cylindrical), which pivotally connects the connecting rod 230 to the machine body 11 or to the rear 22, which rotation axis R1,R2 is slidably connected to the respective connecting rod 230, preferably along a (straight) sliding direction passing through the two rotation axes R1,R2 of the same connecting rod 230.

In particular, each of the aforementioned sliding connections (between the rotation pin defining the rotation axis R1,R2 and connecting rod 23) is formed by a guide slot 231 (or a linear bearing), e.g. with a straight axis, which is made in the connecting rod 230 and has two opposite (axial) ends, preferably semi-cylindrical (adapted to define rotation seats for the rotation pin defining the rotation axis R1,R2).

The guide slot 231 allows a controlled movement of (the pin defining) the rotation axis R1,R2 along the sliding direction.

For example, (the pin defining) the rotation axis R1,R2 substantially engages - in the transverse direction - the guide slot 231 (so that it can only slide along said sliding direction and can rotate within the guide slot).

Furthermore, the sliding connection is free (i.e. unforced/unconditioned), between two end positions, which are defined for example by the two opposite (rounded) ends of the guide slot 231), e.g. fixed along the connecting rod.

The two end positions (i.e. the opposite ends of each guide slot 231) define centers of instantaneous rotation of the connecting rod 230.

In a first variant, shown in Figures 7-10, the (only) first rotation axis R1 that interconnects each connecting rod 230 to the machine body 11 is slidably associated with the respective connecting rod 230 (near the first end thereof).

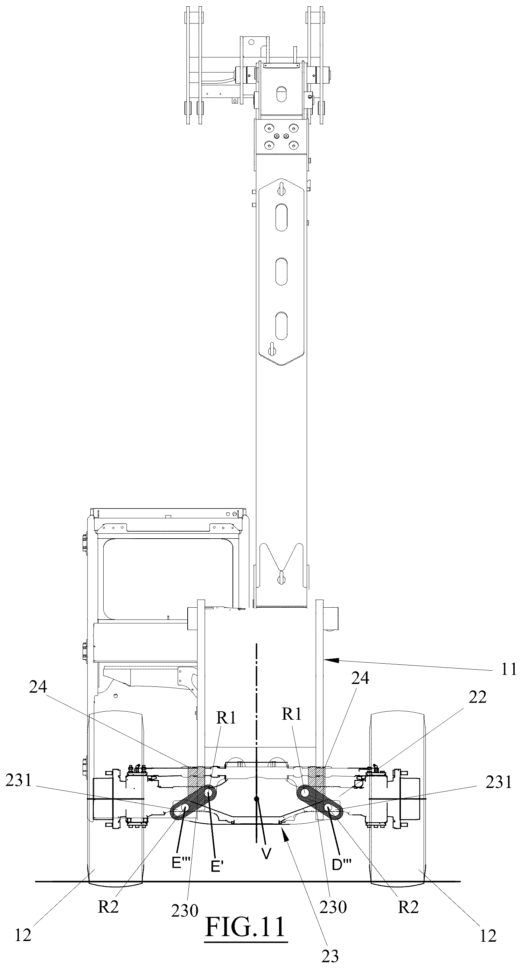

In a second variant, shown in Figures 11-14, the (only) second rotation axis R2 that interconnects each connecting rod 230 to the rear axle 22 is slidably associated with the respective connecting rod 230 (near the second end thereof).

For example, when the front axle 21 and the rear axle 22 are kinematically connected by a drive shaft 210, i.e., a cardan shaft, for the rotational drive of the driving wheels 12 (i.e., the hubs of the axles on which they are mounted), thereby achieving four-wheel drive (4WD), this drive shaft 210 is housed inside a special tunnel 110 of the machine body 110

Said tunnel 110 is configured, in particular in terms of shape and size, to provide the necessary space for the drive shaft 210 to follow the lateral (and vertical) oscillation of the rear axle 22) allowed by the articulated quadrilateral (23).

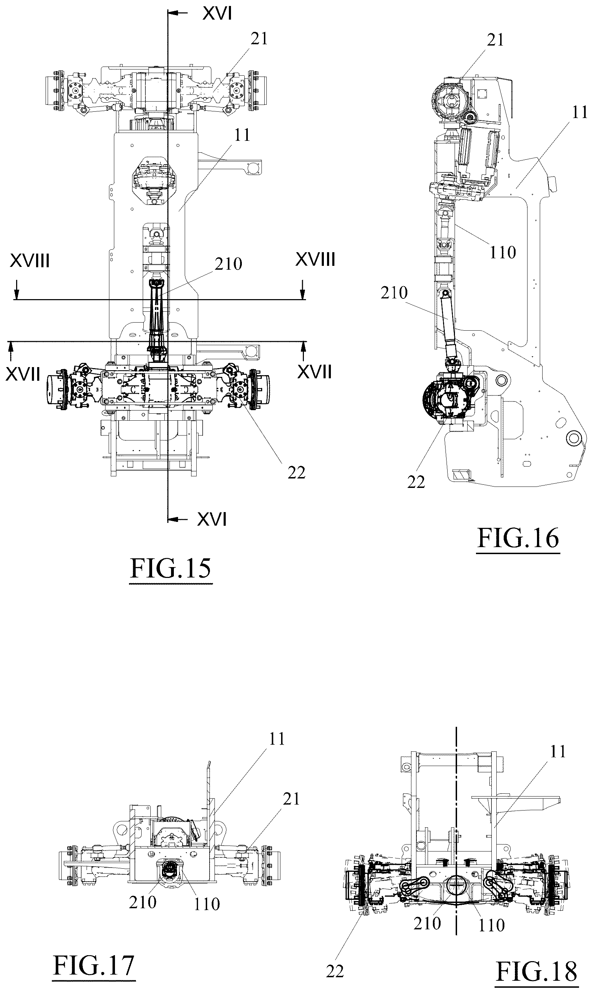

As illustrated in particular in Figures 15-18, in order to allow the transmission of motion while accommodating the oscillatory movement of the rear axle 22 and to provide the necessary space for the drive shaft 210 to follow the oscillation of the rear axle 22 allowed by the articulated quadrilateral 23, the tunnel 110 has a width greater than the maximum width of the drive shaft 210, for example substantially equal to or greater than the maximum width of the drive shaft 21 plus a width equal to the maximum lateral oscillating stroke in one direction allowed by the articulated quadrilateral 23 (for example greater than or equal to twice the maximum width of the drive shaft 210).

Similarly, for example, the height of the tunnel 110 is greater than the height of the drive shaft 210, e.g. substantially equal to or greater than the maximum height of the drive shaft 210 plus a height equal to the maximum vertical oscillating stroke allowed by the articulated quadrilateral 23.

According to a preferred embodiment, in order to best accommodate the angular and distance variations that occur during oscillation, the drive shaft 210 is formed by a plurality of (axial) sections, e.g. three in number, joined together by respective universal joints. Moreover, the telehandler 10 or the propulsion structure 20 comprises a drivetrain unit (not illustrated as it is of known type) configured to drive at least the driving wheels 12, for the movement of the telehandler on the ground.

The drivetrain unit comprises at least an engine.

For example, the drivetrain comprises (or consists of) an endothermic engine. Alternatively, the drivetrain unit comprises (or consists of) an electric engine.

For example, the drivetrain unit may be a hybrid type, i.e. it may comprise an endothermic engine and an electric engine.

For example, the drivetrain unit may also be configured to drive, directly or indirectly, one or more of the hydraulic actuators responsible for the movement of the lifting arm 13 and/or the work tool (and/or parts thereof), or configured to control and command the movement of, for example individually and/or simultaneously, one or more of the hydraulic actuators responsible for the movement of the lifting arm 13 and/or the work tool.

In such a case, the drivetrain unit may comprise a valve distributor comprising one or more sections, each of which can be connected to a respective hydraulic actuator. Furthermore, the drivetrain unit may comprise a supply apparatus, which is configured to provide a flow of operating fluid to the valve distributor.

The supply apparatus comprises, in turn, a pump, which is connected to (and is driven by) the engine of the drivetrain unit (or by a dedicated engine, for example electric).

A supply channel is connected to the pump through which the operating fluid is sent from the pump to the valve distributor, i.e., it is supplied at high pressure to the various sections of the valve distributor.

The supply system further comprises a low-pressure (oil) tank.

The pump is, for example, configured to draw operating fluid from said tank or from another suitable tank.

In the light of what has been described above, the operation of the telehandler 10 is as follows.

Thanks to the articulated quadrilateral 23 which constrains (in a tilting manner) the rear axle 22 to the machine body 11, the stability area of the telehandler 10 is defined/delimited by a stability quadrilateral, in particular a stability trapezium whose vertexes are defined by the centers of the two front wheels 12 (the segment between which the major base of the stability trapezium is defined) and the centers of rotation of the connecting rods 230 connecting the rear axle 22 to the machine body 11 (the segment between which a minor base - of non-zero length and parallel to the major base - of the above-mentioned stability trapezium is defined).

In particular, with reference to the first embodiment shown in Figures 3-6,the stability area of the telehandler 10 (of trapezoidal shape) is delimited by (the projection on a horizontal plane of) two front vertices B and C respectively at the center of the two front wheels 12 (i.e. of the hubs of the front axle 21), where the segment joining such points defines the major base of the stability trapezium, and by (the projection on a horizontal plane of) two rear vertices E' and D', respectively, at the intersection of the rotation axes R1 with a longitudinal median plane (containing the longitudinal axis) of the rear axle 22.

As is known, the stability condition of the telehandler 10 is defined by the fact that as long as the vertical projection of the geometric center of gravity of the telehandler (with the load lifted by it) remains within the stability area (stability trapezium in the example), the telehandler 10 is stable (and does not tip), when the center of gravity leaves this stability area, the telehandler 10 is subject to possible tipping.

Figure 3 diagrams the condition in which the telehandler 10 rests on horizontal ground, and the stability trapezium is delimited by the aforementioned vertices BCE'D'.

This stability area, as is evident from the figure, is larger than the stability triangle (having a front base in the segment BC and a rear vertex V in the center of the rear axle) of conventional telehandlers, which is highlighted in Figure 3 with the dash-period line.

In other words, the stability trapezium BCE'D' contains the hypothetical stability triangle of the known telehandlers, the line E'B lies further to the left of the line VB and the line D'C lies to the right of the line VC; therefore, the support area is enlarged and, with the same mass, geometric dimensions of the telehandler 10 (with the possible load), and center of gravity, the telehandler 10 with axle (rear 22) constrained with the aforementioned articulated quadrilateral 23 is more stable.

Should the telehandler 10 rest on sloping ground or should one of the wheels 12 (e.g. a front wheel 12) enter a pothole and/or depression in the ground, the machine body 11 would for example tilt relative to the rear axle 22, e.g. as shown in Figure 5.

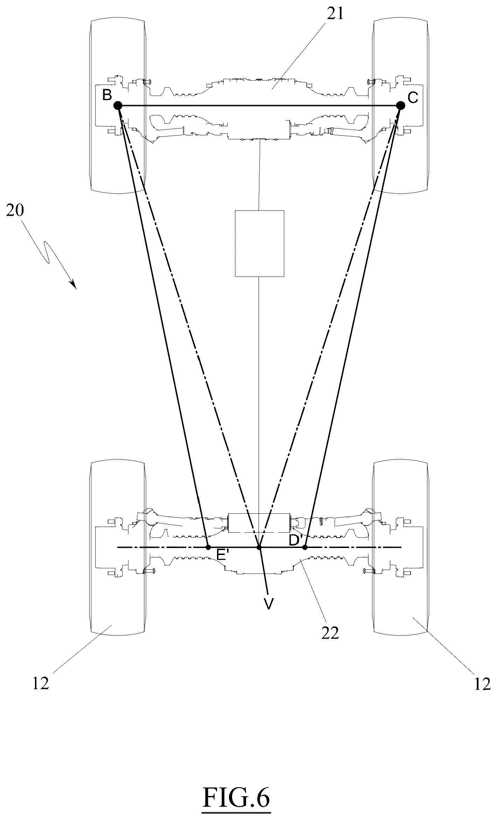

In such a case, the center of gravity of the telehandler 10 would move accordingly (to the right or left) approaching one of the two tipping lines (defined by the segments BE' and CD' illustrated in Figure 6).

However, each of these tipping lines CD' and BE' is more external than the tipping lines VC and VB of a conventional telehandler, thus the widening of such tipping lines (due to the axle being constrained by an articulated quadrilateral 23) promotes the stability of the telehandler 10.

In practice, if the telehandler 10 were to enter a pothole and/or depression in the ground with the right front wheel 12 (Figure 5) or equivalently were to rest on sloping ground, the machine body 11 (and the telehandler itself) would tilt to the right by virtue of the fact that the front axle 21 is rigidly connected to the machine body 11 and the rear axle 22 is constrained thereto by means of the aforementioned articulated quadrilateral 23. In this case, the center of gravity of the telehandler would shift to the right, but the tipping line would also be defined by the segment CD', which is further to the right than the line VC (representing the tipping line of conventional telehandlers), thus promoting stability.

Similarly (symmetrically), if the telehandler 10 were to enter a pothole and/or depression in the ground with the left front wheel 12 or equivalently were to rest on sloping ground, the machine body 11 (and the telehandler itself) would tilt to the left by virtue of the fact that the front axle 21 is rigidly connected to the machine body 11 and the rear axle 22 is constrained thereto by means of the aforementioned articulated quadrilateral 23. In this case, the center of gravity of the telehandler would shift to the left, but the tipping line would also be defined by the segment BE', which is further to the left than the line VB (representing the tipping line of conventional telehandlers), thus promoting stability.

With reference to the first variant of the second embodiment shown in Figures 7-10,the stability area of the telehandler 10 (of trapezoidal shape) is delimited by (the projection on a horizontal plane of) two front vertices B and C respectively at the center of the two front wheels 12 (i.e. of the hubs of the front axle 21), where the segment joining such points defines the major base of the stability trapezium, and by (the projection on a horizontal plane of) two rear vertices E" and D", respectively, at the intersection of the rotation axes R2 with a longitudinal median plane (containing the longitudinal axis) of the rear axle 22.

As is known, the stability condition of the telehandler 10 is defined by the fact that as long as the vertical projection of the geometric center of gravity of the telehandler (with the load lifted by it) remains within the stability area (stability trapezium in the example), the telehandler 10 is stable (and does not tip), when the center of gravity leaves this stability area, the telehandler 10 is subject to possible tipping.

Figure 7 diagrams the condition in which the telehandler 10 rests on horizontal ground, and the stability trapezium is delimited by the aforementioned vertices BCE"D".

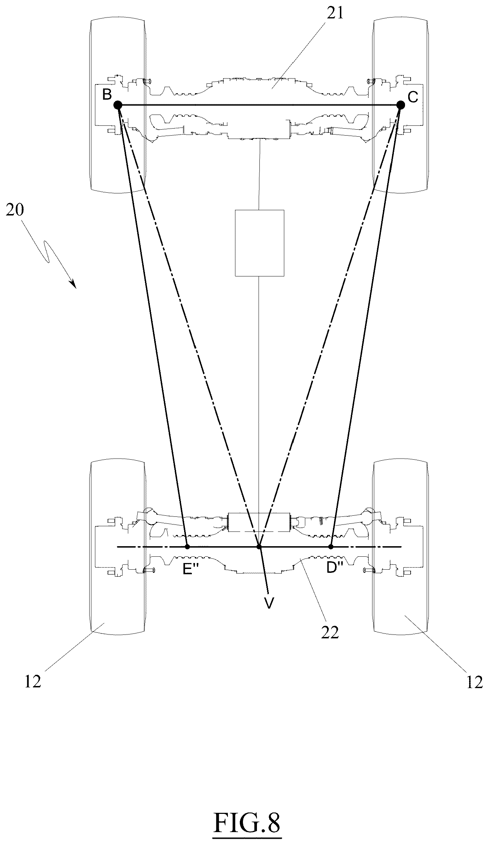

This stability area, as is evident from the figure, is greater than the stability triangle (having front base in segment BC and rear vertex V at the center of the rear axle) of conventional telehandlers, which is highlighted in Figure 8 with the dash-period line (moreover, this stability area is greater than the stability trapezium of the first embodiment delimited by the vertices BCE'D').

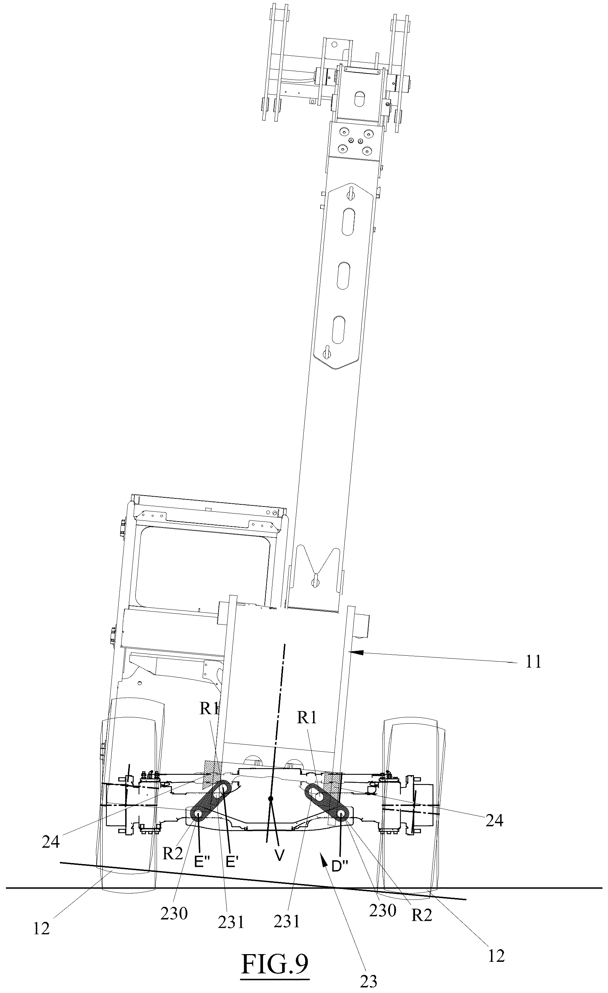

In other words, the stability trapezium BCE"D" contains the hypothetical stability triangle of the known telehandlers, the line E"B lies further to the left of the line VB and the line D"C lies to the right of the line VC; therefore, the support area is enlarged and, with the same mass, geometric dimensions of the telehandler 10 (with the possible load), and center of gravity, the telehandler 10 with axle (rear 22) constrained with the aforementioned articulated quadrilateral 23 (with glyph connecting rods) is more stable. Should the telehandler 10 rest on sloping ground or should one of the wheels 12 (e.g. a front wheel 12) enter a pothole and/or depression in the ground, the machine body 11 would for example tilt relative to the rear axle 22, e.g. as shown in Figure 9.

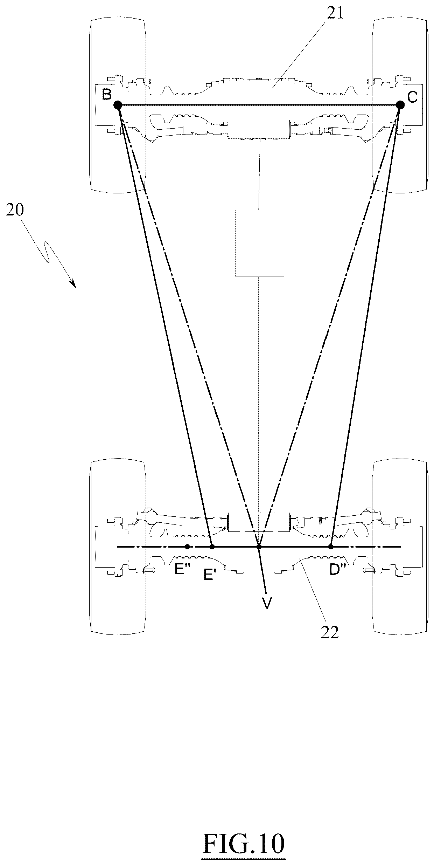

In such a case, the center of gravity of the telehandler 10 would move accordingly (to the right or left) approaching one of the two tipping lines (defined by the segments BE" and CD" illustrated in Figure 10).

However, each of these tipping lines CD" and BE" is more external than the tipping lines VC and VB of a conventional telehandler (and also of those of the telehandler according to the first embodiment), thus the widening of such tipping lines (due to the axle being constrained by an articulated quadrilateral 23, in this case with glyph connecting rods) promotes the stability of the telehandler 10.

In practice, if the telehandler 10 were to enter a pothole and/or depression in the ground with the right front wheel 12 (Figure 10) or equivalently were to rest on sloping ground, the machine body 11 (and the telehandler itself) would tilt to the right by virtue of the fact that the front axle 21 is rigidly connected to the machine body 11 and the rear axle 22 is constrained thereto by means of the aforementioned articulated quadrilateral 23 (with glyph connecting rods). In this case, the center of gravity of the telehandler would shift to the right, but the tipping line would also be defined by the segment CD", which is further to the right than the line VC (representing the tipping line of conventional telehandlers), thus promoting stability.

Similarly (symmetrically), if the telehandler 10 were to enter a pothole and/or depression in the ground with the left front wheel 12 or equivalently were to rest on sloping ground, the machine body 11 (and the telehandler itself) would tilt to the left by virtue of the fact that the front axle 21 is rigidly connected to the machine body 11 and the rear axle 22 is constrained thereto by means of the aforementioned articulated quadrilateral 23. In this case, the center of gravity of the telehandler would shift to the left, but the tipping line would also be defined by the segment BE", which is further to the left than the line VB (representing the tipping line of conventional telehandlers), thus promoting stability. Finally, with reference to the second variant of the second embodiment shown in Figures 11-14, the stability area of the telehandler 10 (of trapezoidal shape) is delimited by (the projection on a horizontal plane of) two front vertices B and C respectively in the center of the two front wheels 12 (i.e. of the hubs of the front axle 21), where the segment joining such points defines the major base of the stability trapezium, and by (the projection on a horizontal plane of) two rear vertices E" and D", respectively, at the intersection of the rotation axes R2, in one of the two end positions thereof (along the respective guide slot 231) with a longitudinal median plane (containing the longitudinal axis) of the rear axle 22.

As is known, the stability condition of the telehandler 10 is defined by the fact that as long as the vertical projection of the geometric center of gravity of the telehandler (with the load lifted by it) remains within the stability area (stability trapezium in the example), the telehandler 10 is stable (and does not tip), when the center of gravity leaves this stability area, the telehandler 10 is subject to possible tipping.

Figure 11 diagrams the condition in which the telehandler 10 rests on horizontal ground, and the stability trapezium is delimited by the aforementioned vertices BCE‴D‴.

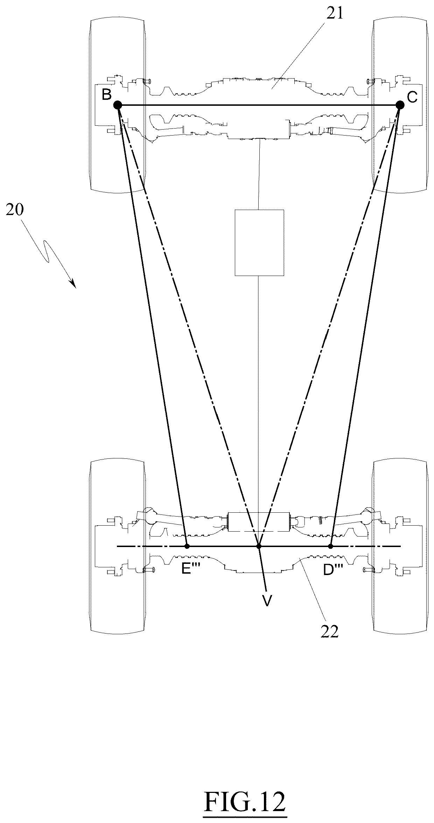

This stability area, as is evident from the figure, is greater than the stability triangle (having front base in segment BC and rear vertex V at the center of the rear axle) of conventional telehandlers, which is highlighted in Figure 12 with the dash-period line (moreover, this stability area is greater than the stability trapezium of the first embodiment delimited by the vertices BCE'D').

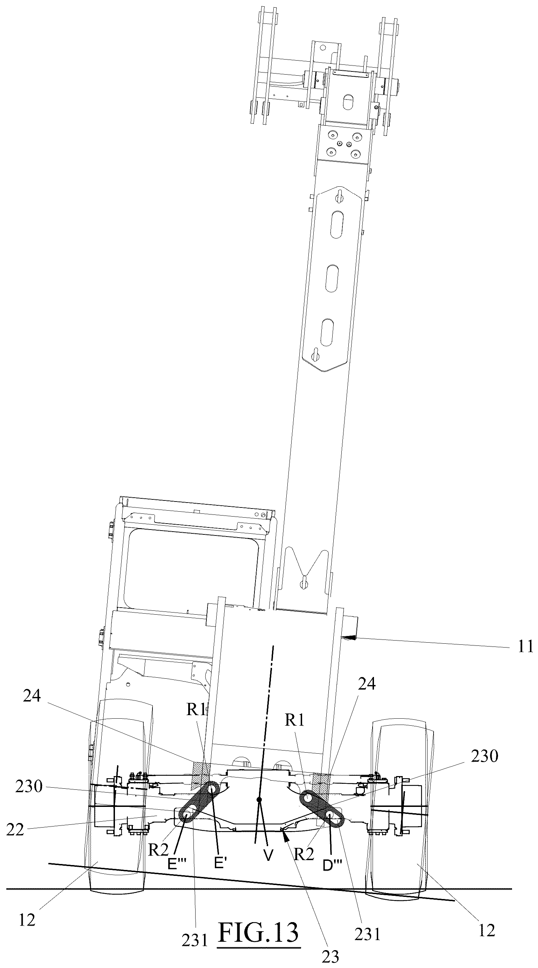

In other words, the stability trapezium BCE‴D‴ contains the hypothetical stability triangle of the known telehandlers, the line E"'B lies further to the left of the line VB and the line D‴C lies to the right of the line VC; therefore, the support area is enlarged and, with the same mass, geometric dimensions of the telehandler 10 (with the possible load), and center of gravity, the telehandler 10 with axle (rear 22) constrained with the aforementioned articulated quadrilateral 23 (with "reverse" glyph connecting rods) is more stable. Should the telehandler 10 rest on sloping ground or should one of the wheels 12 (e.g. a front wheel 12) enter a pothole and/or depression in the ground, the machine body 11 would for example tilt relative to the rear axle 22, e.g. as shown in Figure 13.

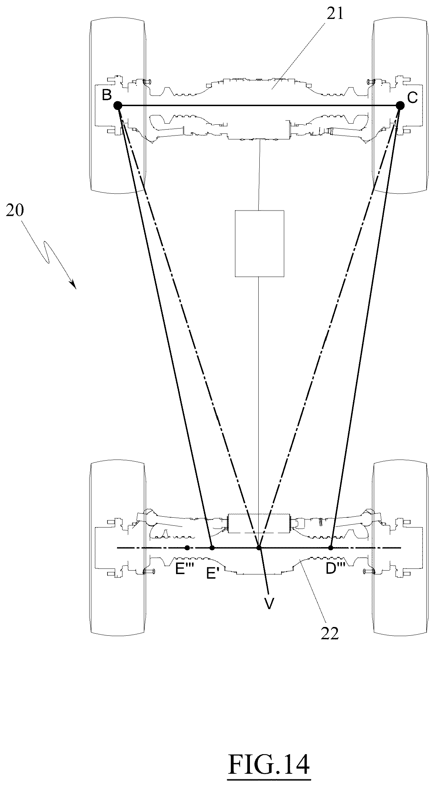

In such a case, the center of gravity of the telehandler 10 would move accordingly (to the right or left) approaching one of the two tipping lines (defined by the segments BE‴ and CD‴ illustrated in Figure 14).

However, each of these tipping lines CD‴ and BE‴ is more external than the tipping lines VC and VB of a conventional telehandler (and also of those of the telehandler according to the first embodiment), thus the widening of such tipping lines (due to the axle being constrained by an articulated quadrilateral 23, in this case with "reverse" glyph connecting rods) promotes the stability of the telehandler 10.

In practice, if the telehandler 10 were to enter a pothole and/or depression in the ground with the right front wheel 12 (Figure 13) or equivalently were to rest on sloping ground, the machine body 11 (and the telehandler itself) would tilt to the right by virtue of the fact that the front axle 21 is rigidly connected to the machine body 11 and the rear axle 22 is constrained thereto by means of the aforementioned articulated quadrilateral 23 (with "reverse" glyph connecting rods). In this case, the center of gravity of the telehandler would shift to the right, but the tipping line would also be defined by the segment CD‴, which is further to the right than the line VC (representing the tipping line of conventional telehandlers), thus promoting stability.

Similarly (symmetrically), if the telehandler 10 were to enter a pothole and/or depression in the ground with the left front wheel 12 or equivalently were to rest on sloping ground, the machine body 11 (and the telehandler itself) would tilt to the left by virtue of the fact that the front axle 21 is rigidly connected to the machine body 11 and the rear axle 22 is constrained thereto by means of the aforementioned articulated quadrilateral 23. In this case, the center of gravity of the telehandler would shift to the left, but the tipping line would also be defined by the segment BE‴, which is further to the left than the line VB (representing the tipping line of conventional telehandlers), thus promoting stability. The invention thus conceived is susceptible to many modifications and variants, all falling within the same inventive concept.

Moreover, all the details can be replaced by other technically equivalent elements.

In practice, the materials used, as well as the contingent shapes and sizes, can be whatever according to the requirements without for this reason departing from the scope of protection of the following claims.

## Claims

1. A telehandler (10) comprising:
a machine body (11) supporting a driver's cab (14),
a propulsion structure (20) configured to permit movement of the telehandler (10) over the ground,
a load handling apparatus (13) coupled to the machine body (11) and movable by a movement actuator (130) with respect to the machine body (11),
wherein the propulsion structure (20) comprises a front axle (21) and a rear axle (22) supporting the machine body (11), and
wherein at least one of the front axle (21) and the rear axle (22) is coupled to the machine body (11) by means of an articulated quadrilateral such that the center of the axle can freely oscillate between two end positions located on opposite sides of a vertical median plane of the telehandler (10).

2. The telehandler (10) according to claim 1, wherein the articulated quadrilateral (23) comprises at least a pair of connecting rods (230), including at least one right rod and at least one left rod, each of said rods (230) being pivotally connected to the machine body (11) and to the axle (21, 22), preferably about rotation axes (R1, R2) that are parallel to each other and parallel to a longitudinal axis (A1) of the telehandler (10).

3. The telehandler (10) according to claim 2, wherein each connecting rod (230) is pivotally connected to the machine body (11) about rotation axes (R1, R2) located on the same side relative to the vertical median plane of the telehandler (10), preferably at a non-zero distance therefrom.

4. The telehandler (10) according to claim 2 or 3, wherein the connecting rods (230) of the pair of connecting rods have the same length, forming a trapezoidal configuration.

5. The telehandler (10) according to claim 2 or 3, wherein each connecting rod (230) is pivotally connected to the machine body (11) about rotation axes (R1, R2) that are parallel to each other and parallel to both the vertical median plane of the telehandler (10) and the longitudinal axis (A1) of the telehandler (10).

6. The telehandler (10) according to claim 1, wherein the oscillation of the axle (21, 22) is limited by mechanical end stops (24) located on opposite sides of the vertical median plane of the telehandler (10).

7. The telehandler (10) according to claim 1, wherein only the rear axle (22) is coupled to the machine body (11) by means of said articulated quadrilateral (23).

8. The telehandler (10) according to claim 1, wherein the propulsion structure (20) comprises wheels (12) mounted on the axles (21, 22), and the oscillation of the axle (21, 22) allowed by the articulated quadrilateral (23) is configured to adapt to uneven ground surfaces.

9. The telehandler (10) according to claim 1, wherein the load handling apparatus comprises a telescopic lifting arm (13) pivotally connected to the machine body (11) and movable by means of the movement actuator (130).

10. The telehandler (10) according to claim 9, wherein the load handling apparatus further comprises a tool holder plate (131) configured to engage a tool and mounted at a free end of the lifting arm (13).

11. The telehandler (10) according to claim 2 or 3, wherein the connecting rods (230) of the articulated quadrilateral (23) are oscillating glyph connecting rods.

12. The telehandler (10) according to claim 11, wherein each connecting rod (230) has at least one of the rotation axes (R1, R2), which pivotally connects the connecting rod (230) to the machine body (11) or to the axle (21, 22), that is slidably connected to the respective connecting rod (230), preferably along a sliding direction passing through the two rotation axes (R1, R2) of the same connecting rod (230).

13. The telehandler (10) according to claim 12, wherein the sliding connection comprises a guide slot (231) formed in the connecting rod (230), which allows controlled movement of the rotation axis (R1, R2) along the sliding direction.

14. The telehandler (10) according to claim 12 or 13, wherein the sliding connection is free to move between two end positions.

15. The telehandler (10) according to claim 1, comprising a drive shaft (210) kinematically connecting the front axle (21) and the rear axle (22), and a tunnel (110) integral with the machine body (11) within which said drive shaft (210) is housed, wherein said tunnel (110) is configured to allow an oscillation of the drive shaft (210) adapted to accommodate the oscillation of the axle (22) allowed by the articulated quadrilateral (23).
